# EUROPEAN PATENT SPECIFICATION

(11) **EP 3 665 525 B1**
(45) Date of publication and mention of the grant of the patent: **12.10.2022**
(21) Application number: 18820453.1
(22) Date of filing: 20.06.2018
(51) Int. Cl.: G02B 27/01

(54) **ENHANCED REALITY WEARABLE VISUALIZATION**
VISUALISIERUNG AUF EINEM WEARABLE DER ERWEITERTEN REALITÄT
VISUALISATION POUVANT ÊTRE PORTÉE À RÉALITÉ AUGMENTÉE

(30) Priority: 20.06.2017 US 201762522675 P; 19.06.2018 US 201816012747
(43) Date of publication of application: 17.06.2020
(73) Proprietor: Photonica, Inc., Beverly Hills, CA 90210 (US)
(72) Inventor: ELLWOOD, Sutherland Cook, Clinton Corners, NY 12514 (US)
(74) Representative: Ungerer, Olaf
(86) International application number: PCT/US2018/038413
(87) International publication number: WO 2018/236947

(56) References cited:
- DE-A1- 10 350 529
- US-A1- 2002 075 201
- US-A1- 2010 182 340
- US-A1- 2010 220 193
- US-A1- 2011 261 207
- US-A1- 2013 049 011
- US-A1- 2016 163 063

## Description

### FIELD OF THE INVENTION

The present invention relates generally to video and digital image and data processing devices and networks which generate, transmit, switch, allocate, store, and display such data, as well as non-video and non-pixel data processing in arrays, such as sensing arrays and spatial light modulators, and the application and use of such data for enhanced reality wearable visualization systems and methods which provide image capture, transmission, allocation, division, organization, storage, delivery, display and projection of pixel signals or data signals or aggregations or collections of such information or signals such that the systems and methods may employ, to a degree appropriate for the design requirement, a passive optical system and components to reduce a demand on active device systems for processing sensor data, especially in real-time, and for computation of computer-generated imagery and of computation of 2D or 3D, perspective-view integration of real and synthetic/digital or stored digital image information.

### BACKGROUND OF THE INVENTION

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also be inventions.

Embodiments of the present invention are not an isolated solution, but rather draws from and merges aspects of two related fields: augmented reality (AR) and virtual reality (VR), these "altered reality" fields referred to herein as enhanced reality (ER) to address and provide an integrated wearable ER solution that solves critical problems and limitations of the prior art from both fields.

The patent references disclose technologies that may be used in a wide range of ER solutions. These technologies have been described using generic and specific configurations for a wide range of applications.

There may be one or more application categories for ER that do not require a complete range of features as disclosed in the incorporated references. For some application categories, some of the performance metrics and features that are not needed may add additional cost and complexity without adding, in these applications, enough other value to warrant their inclusion.

However it is not always a simple matter to remove or adjust a subset of features while retaining other desired features. It may be desirable in some contexts to provide a wearable ER visualization solution that enables immersion and calibration to a real- world environment while including important operational features that are superior to conventional AR and VR solutions.

The DE 103 50 529 A1 discloses a head-up display system that has a flat and mainly transparent anti-Stokes and/or UV element integrated in a windshield panel or in a transparent flat display element. During radiation with NIR- and/or UV-rays, a visible information is generated for the human eye. The anti-Stokes and/or UV element can be arranged in the area of a beam path of a viewer and a required transparency may then be taken into account. In the case of an anti-Stokes and/or UV element arranged outside the beam path, the emission brightness can be made as high as possible and the signal effect can be increased in this way.

### BRIEF SUMMARY OF THE INVENTION

Disclosed is a system and method for providing a wearable ER visualization solution that enables immersion and calibration to a real-world environment while including important operational features that are superior to conventional AR and VR solutions

The following summary of the invention is provided to facilitate an understanding of some of technical features related to signal processing, and is not intended to be a full description of the present invention. A full appreciation of the various aspects of the invention can be gained by taking the entire specification, claims, drawings, and abstract as a whole.

Embodiments of this invention may involve decomposing the components of an integrated pixel-signal "modulator" into discrete signal processing stages and thus into a telecom-type network, which may be compact or spatially remote. The operatively most basic version proposes a three-stage "pixel-signal processing" sequence, comprising: pixel logic "state" encoding, which is typically accomplished in an integrated pixel modulator, which is separated from the color modulation stage, which is in turn separated from the intensity modulation stage. A more detailed pixel-signal processing system is further elaborated, which includes sub-stages and options, and which is more detailed and specifically-tailored to the efficient implementation of magneto-photonic systems, and consist in 1) an efficient illumination source stage in which bulk light, preferably non-visible near-IR, is converted to appropriate mode(s) and launched into channelized array and which supplies stage 2), pixel-logic processing and encoding; followed by 3) optional non-visible energy filter and recovery stage; 4) optional signal-modification stage to improve/modify attributes such as signal splitting and mode modification; 5) frequency/wavelength modulation/shifting and additional bandwidth and peak intensity management; 6) optional signal amplification/gain; 7) optional analyzer for completing certain MO-type light-valve switching; 8) optional configurations for certain wireless (stages) of Pixel-signal Processing and Distribution. In addition, a DWDM-type configuration of this system is proposed, which provides a version of and pathway to all-optical networks, with major attended cost and efficiencies to be gained thereby: specifically motivated and making more efficient the handling of image information, both live and recorded. And finally, new hybrid magneto-photonic devices and structures are proposed and others previously not practical for systems of the present disclosure enabled, to make maximal use of the pixel-signal processing system and around which such a system is optimally configured, including new and/or improved versions of devices based on the hybridization of magneto-optic and non-magneto-optic effects (such as slow light and inverse-magneto-optic effects), realizing new fundamental switches, and new hybrid 2D and 3D photonic crystal structure types which improve a many if not most MPC-type devices for all applications.

In an incorporated reference, a new class of display systems is proposed, which decompose the components of a typically integrated pixel-signal "modulator" into discrete signal processing stages. Thus, the basic logic "state" of what is typically accomplished in an integrated pixel modulator is separated from the color modulation stage which is separated from the intensity modulation stage. This may be thought of as a telecom signal-processing architecture applied to the problem of visible image pixel modulation. Typically, three signal-processing stages and three separate device components and operations are proposed, although additional signal-influencing operations may be added and are contemplated, including polarization characteristics, conversion from conventional signal to other forms such as polaritons and surface plasmons, superposition of signal (such as a base pixel on/off state superposed on other signal data), etc. Highly distributed video-signal processing architectures across broadband networks, serving relatively "dumb" display fixtures composed substantially of later stages of passive materials, is a major consequence, as well as compact photonic integrated circuit devices which implement discrete signal processing steps in series, on the same device or devices in intimate contact between separate devices, and in large arrays.

A wearable enhanced reality visualization system, including a real-world processor producing a set of real-world signals; an enhanced-world generator producing a set of non-real-world enhancement signals, the set of non-world enhancement signals having one or more wavelengths below a visible spectrum of a human visual system; and a backplane merging a set of contributions from the set of real-world signals and the set of non-real-world enhancement signals to produce an enhanced world visualization; wherein the backplane up-converts the set of contributions below the visible spectrum to one or more wavelengths in the visible spectrum.

A method for producing an enhanced reality visualization in a wearable device, including a) producing a set of real-world signals from ambient of the wearable device; b) producing a set of non-real world enhancement signals, the set of non-world enhancement signals having one or more wavelengths below a visible spectrum of a human visual system; c) merging a set of contributions from the set of real-world signals and the set of non-real-world enhancement signals to produce an enhanced world visualization; and d) up-converting the set of contributions below the visible spectrum to one or more wavelengths in the visible spectrum.

An embodiment may include a wearable ER visualization system, method, and architecture includes a real-world processor, an enhanced-world (or virtual-world) generator, and an "anti-Stokes-type" up-converting backplane merging contributions from the processor and generator produces an ER visualization. The ER generator implements a Faraday Anti-Stokes Display (FASD) architecture for processing IR for signal definition of an IR image and then a cooperative set of anti-Stokes-type emitters up-converting the IR image to a visible (and in some cases color-mapped) virtual image. The real-world radiation and the virtual image may be composited to create the ER image for presentation to a human visual system, such as of an observer.

Any of the embodiments described herein may be used alone or together with one another in any combination. Inventions encompassed within this specification may also include embodiments that are only partially mentioned or alluded to or are not mentioned or alluded to at all in this brief summary or in the abstract. Although various embodiments of the invention may have been motivated by various deficiencies with the prior art, which may be discussed or alluded to in one or more places in the specification, the embodiments of the invention do not necessarily address any of these deficiencies. In other words, different embodiments of the invention may address different deficiencies that may be discussed in the specification. Some embodiments may only partially address some deficiencies or just one deficiency that may be discussed in the specification, and some embodiments may not address any of these deficiencies.

Other features, benefits, and advantages of the present invention will be apparent upon a review of the present disclosure, including the specification, drawings, and claims.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates an imaging architecture that may be used to implement embodiments of the present invention;
FIG. 2 illustrates an embodiment of a photonic signal converter implementing a version of the imaging architecture of FIG. 1 using a photonic signal converter as a signal processor;
FIG. 3 illustrates a general structure for a photonic signal converter of FIG. 2;
FIG. 4 illustrates a particular embodiment using the imaging architecture of FIG. 1 implementing an enhanced reality (ER) wearable visualization solution; and
FIG. 5 illustrates an embodiment of an anti-Stokes-type up-converting backplane used in the ER wearable visualization solution of FIG. 4.

### DETAILED DESCRIPTION OF THE INVENTION

Embodiments of the present invention provide a system and method for re-conceiving the process of capture, distribution, organization, transmission, storage, and presentation to the human visual system or to non-display data array output functionality, in a way that liberates device and system design from compromised functionality of non-optimized operative stages of those processes and instead de-composes the pixel-signal processing and array-signal processing stages into operative stages that permits the optimized function of devices best-suited for each stage, which in practice means designing and operating devices in frequencies for which those devices and processes work most efficiently and then undertaking efficient frequency/wavelength modulation/shifting stages to move back and forth between those "Frequencies of convenience," with the net effect of further enabling more efficient all-optical signal processing, both local and long-haul. The following description is presented to enable one of ordinary skill in the art to make and use the invention and is provided in the context of a patent application and its requirements.

Various modifications to the preferred embodiment and the generic principles and features described herein will be readily apparent to those skilled in the art. Thus, the present invention is not intended to be limited to the embodiment shown but is to be accorded the widest scope consistent with the principles and features described herein.

### Definitions

Unless otherwise defined, all terms (including technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

The following definitions apply to some of the aspects described with respect to some embodiments of the invention. These definitions may likewise be expanded upon herein.

As used herein, the term "or" includes "and/or" and the term "and/or" includes any and all combinations of one or more of the associated listed items. Expressions such as "at least one of," when preceding a list of elements, modify the entire list of elements and do not modify the individual elements of the list.

As used herein, the singular terms "a," "an," and "the" include plural referents unless the context clearly dictates otherwise. Thus, for example, reference to an object can include multiple objects unless the context clearly dictates otherwise.

Also, as used in the description herein and throughout the claims that follow, the meaning of "in" includes "in" and "on" unless the context clearly dictates otherwise. It will be understood that when an element is referred to as being "on" another element, it can be directly on the other element or intervening elements may be present therebetween. In contrast, when an element is referred to as being "directly on" another element, there are no intervening elements present.

As used herein, the term "set" refers to a collection of one or more objects. Thus, for example, a set of objects can include a single object or multiple objects. Objects of a set also can be referred to as members of the set. Objects of a set can be the same or different. In some instances, objects of a set can share one or more common properties.

As used herein, the term "adjacent" refers to being near or adjoining. Adjacent objects can be spaced apart from one another or can be in actual or direct contact with one another. In some instances, adjacent objects can be coupled to one another or can be formed integrally with one another.

As used herein, the terms "connect," "connected," and "connecting" refer to a direct attachment or link. Connected objects have no or no substantial intermediary object or set of objects, as the context indicates.

As used herein, the terms "couple," "coupled," and "coupling" refer to an operational connection or linking. Coupled objects can be directly connected to one another or can be indirectly connected to one another, such as via an intermediary set of objects.

As used herein, the terms "substantially" and "substantial" refer to a considerable degree or extent. When used in conjunction with an event or circumstance, the terms can refer to instances in which the event or circumstance occurs precisely as well as instances in which the event or circumstance occurs to a close approximation, such as accounting for typical tolerance levels or variability of the embodiments described herein.

As used herein, the terms "optional" and "optionally" mean that the subsequently described event or circumstance may or may not occur and that the description includes instances where the event or circumstance occurs and instances in which it does not.

As used herein, the term "functional device" means broadly an energy dissipating structure that receives energy from an energy providing structure. The term functional device encompasses one-way and two-way structures. In some implementations, a functional device may be component or element of a display.

As used herein, the term "display" means, broadly, a structure or method for producing display constituents. The display constituents are a collection of display image constituents produced from processed image constituent signals generated from display image primitive precursors. The image primitive precursors have sometimes in other contexts been referred to as a pixel or sub-pixel. Unfortunately the term "pixel" has developed many different meanings, including outputs from the pixel/subpixels, and the constituents of the display image. Some embodiments of the present invention include an implementation that separates these elements and forms additional intermediate structures and elements, some for independent processing, which could further be confused by referring to all these elements elements/structures as a pixel so the various terms are used herein to unambiguously refer to the specific component/element. A display image primitive precursor emits an image constituent signal which may be received by an intermediate processing system to produce a set of display image primitives from the image constituent signals. The collection of display image primitives producing an image when presented, by direct view through a display or reflected by a projection system, to a human visual system under the intended viewing conditions. A signal in this context means an output of a signal generator that is, or is equivalent to, a display image primitive precursor. Importantly, that as long as processing is desired, these signals are preserved as signals within various signal-preserving propagating channels without transmission into free space where the signal creates an expanding wavefront that combines with other expanding wave fronts from other sources that are also propagating in free space. A signal has no handedness and does not have a mirror image (that is there is not a reversed, upside-down, or flipped signal while images, and image portions, have different mirror images). Additionally, image portions are not directly additive (overlapping one image portion on another is difficult, if at all possible, to predict a result) and it can be very difficult to process image portions. There are many different technologies that may be used as a signal generator, with different technologies offering signals with different characteristics or benefits, and differing disadvantages. Some embodiments of the present invention allow for a hybrid assembly/system that may borrow advantages from a combination of technologies while minimizing disadvantages of any specific technology. Incorporated US Patent No. 9,584,778, describes systems and methods that are able to advantageously combine such technologies and the term display image primitive precursor thus covers the pixel structures for pixel technologies and the sub-pixel structures for sub-pixel technologies.

As used herein, the term "signal" refers to an output from a signal generator, such as a display image primitive precursor, that conveys information about the status of the signal generator at the time that the signal was generated. In an imaging system, each signal is a part of the display image primitive that, when perceived by a human visual system under intended conditions, produces an image or image portion. In this sense, a signal is a codified message, that is, the sequence of states of the display image primitive precursor in a communication channel that encodes a message. A collection of synchronized signals from a set of display image primitive precursors may define a frame (or a portion of a frame) of an image. Each signal may have a characteristic (color, frequency, amplitude, timing, but not handedness) that may be combined with one or more characteristics from one or more other signals.

As used herein, the term "human visual system" (HVS) refers to biological and psychological processes attendant with perception and visualization of an image from a plurality of discrete display image primitives, either direct view or projected. As such, the HVS implicates the human eye, optic nerve, and human brain in receiving a composite of propagating display image primitives and formulating a concept of an image based on those primitives that are received and processed. The HVS is not precisely the same for everyone, but there are general similarities for significant percentages of the population.

As used herein, the terms "infrared radiation" "infrared" or "IR" mean electromagnetic radiation having wavelengths longer than visible radiation. A range of IR includes about 700 nanometers (~430 TeraHertz or THz) to 100,000 nm (∼300 GHz) and having a photon energy of 1.24 meV to 1.7 eV. In some situations it may desirable to refer to specific sub-divisions of IR, including near-infrared (75-140 nm), short-wavelength infrared (140-300 nm), mid-wavelength infrared (~300-800 nm), long-wavelength infrared (~800-1500 nm), and far-infrared (-1500-100,000 nm). For reference the visible spectrum is a portion of the electromagnetic spectrum that is visible to the human eye or HVS. Electromagnetic radiation in this range of wavelengths is called visible light or sometimes simply light. A typical human eye will respond to wavelengths from about 390 to 700 nanometers. In terms of frequency, this corresponds to a band in the vicinity of ~430-770 THz.

As used herein, the term "anti-Stokes-type emitter" refers to a material, an assembly or structure that responds to absorption, receipt, or application of one or more photons or phonons at a first energy level to emit, transmit, or produce a photon or phonon at a second higher energy level through an anti-Stokes shift effect. This anti-Stokes-type emitter may include materials, assemblies, or structures may include photon up-conversion processes such as demonstrated by the up-converting effects of nanoparticle compositions. In some of the embodiments presented herein, these anti-Stokes-type emitters operate with the photons/phonons having a first energy level in the infrared range and the second energy in the visible range. An "anti-Stokes-type" conversion is used here equivalently to the term "up-conversion", as in the up-conversion of photons of a lower energy/lower frequency, via any operative mechanism now known or to be discovered in the future, to photons of higher-energy/higher frequency. "Anti-Stokes" refers to the fact that historically the first and best known frequency conversion effect was the "Stokes shift," named after George Stokes, in which photons of higher energy/frequency were converted to photons of lower energy/frequency, through an absorption/emission process in which energy was lost and the frequency of the emitted light is also lower. Though energy is expended, this effect ultimately proved to have utility for certain applications. The exactly equivalent but opposite absorption/emission paradigm is an "anti-Stokes shift," and "anti-Stokes" is used herein to emphasize the contrast to the earlier and better known phenomenon. Energy is typically lost from input to output, but despite this and by operation of a variety of physical mechanisms, the net output photons possess a higher frequency than the net input photons, and the efficiency (lossiness) of the various processes is not by virtue of the frequency differential (up-conversion, anti-Stokes-type) per se less efficient or require more energy than down-conversion processes (Stokes-type).

As used herein, the term "Faraday effect" or "Faraday rotation" refers to a magnetooptical (MO) phenomenon that may be used to cause a desired amount of polarization rotation responsive to a magnetic field, under specified conditions. Some of the embodiments described herein may include imaging components that make use of a Faraday modulator to control a switching of electromagnetic radiation in the IR spectrum that may be used in cooperation with the anti-Stokes-type emitter.

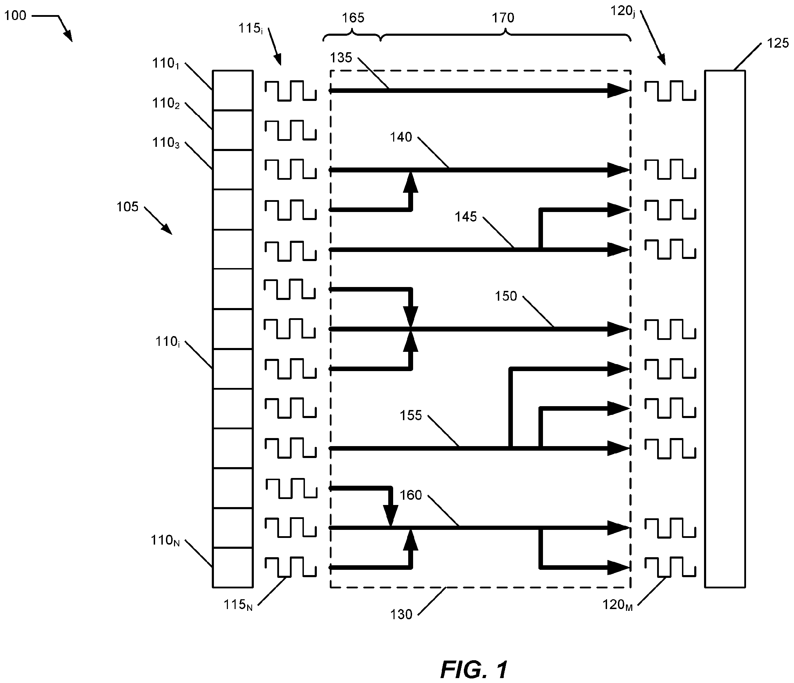

FIG. 1 illustrates an imaging architecture 100 that may be used to implement embodiments of the present invention. Some embodiments of the present invention contemplate that formation of a human perceptible image using a human visual system (HVS) - from a large set of signal generating structures includes architecture 100. Architecture 100 includes: an image engine 105 that includes a plurality of display image primitive precursors (DIPPs) 110i, i = 1 to N (N may be any whole number from 1 to tens, to hundreds, to thousands, of DIPPs). Each DIPP 110ᵢ is appropriately operated and modulated to generate a plurality of image constituent signals 115ᵢ, i = 1 to N (an individual image constituent signal 115ᵢ from each DIPP 110ᵢ). These image constituent signals 115ᵢ are processed to form a plurality of display image primitives (DIPs) 120ⱼ, j = 1 to M, M a whole number less than, equal to, or greater than N. An aggregation/collection of DIPs 120ⱼ (such as 1 or more image constituent signals 115ᵢ occupying the same space and cross-sectional area) that will form a display image 125 (or series of display images for animation/motion effects for example) when perceived by the HVS. The HVS reconstructs display image 125 from DIPs 120ⱼ when presented in a suitable format, such as in an array on a display or a projected image on a screen, wall, or other surface. This is familiar phenomenon of the HVS perceiving an image from an array of differently colored or grey-scales shadings of small shapes (such as "dots") that are sufficiently small in relation to the distance to the viewer (and HVS). A display image primitive precursor 110ᵢ will thus correspond to a structure that is commonly referred to as a pixel when referencing a device producing an image constituent signal from a non-composite color system and will thus correspond to a structure that is commonly referred to as a sub-pixel when referencing a device producing an image constituent signal from a composite color system. Many familiar systems employ composite color systems such as RGB image constituent signals, one image constituent signal from each RGB element (e.g., an LCD cell or the like). Unfortunately, the term pixel and sub-pixel are used in an imaging system to refer to many different concepts - such as a hardware LCD cell (a sub-pixel), the light emitted from the cell (a sub-pixel), and the signal as it is perceived by the HVS (typically such sub-pixels have been blended together and are configured to be imperceptible to the user under a set of conditions intended for viewing). Architecture 100 distinguishes between these various "pixels or sub-pixels" and therefore a different terminology is adopted to refer to these different constituent elements.

Architecture 100 may include a hybrid structure in which image engine 105 includes different technologies for one or more subsets of DIPPs 110. That is, a first subset of DIPPs may use a first color technology, e.g., a composite color technology, to produce a first subset of image constituent signals and a second subset of DIPPS may use a second color technology, different from the first color technology, e.g., a different composite color technology or a non-composite color technology) to produce a second subset of image constituent signals. This allows use of a combination of various technologies to produce a set of display image primitives, and display image 125, that can be superior than when it is produced from any single technology.

Architecture 100 further includes a signal processing matrix 130 that accepts image constituent signals 115ᵢ as an input and produces display image primitives 120ⱼ at an output. There are many possible arrangements of matrix 130 (some embodiments may include single dimensional arrays) depending upon fit and purpose of any particular implementation of an embodiment of the present invention. Generally, matrix 130 includes a plurality of signal channels, for example channel 135-channel 160. There are many different possible arrangements for each channel of matrix 130. Each channel is sufficiently isolated from other channels, such as optical isolation that arises from discrete fiber optic channels, so signals in one channel do not interfere with other signals beyond a crosstalk threshold for the implementation/embodiment. Each channel includes one or more inputs and one or more outputs. Each input receives an image constituent signal 115 from DIPP 110. Each output produces a display image primitive 120. From input to output, each channel directs pure signal information, and that pure signal information at any point in a channel may include an original image constituent signal 115, a disaggregation of a set of one or more processed original image constituent signals, and/or an aggregation of a set of one or more processed original image constituent signals, each "processing" may have included one or more aggregations or disaggregations of one or more signals.

In this context, aggregation refers to combining signals from an S_{A} number, S_{A} > 1, of channels (these aggregated signals themselves may be original image constituent signals, processed signals, or a combination) into a T_{A} number (1 ≤ T_{A} < S_{A}) of channels and disaggregation refers to a division of signals from an S_{D} number, S_{D} ≥ 1, of channels (which themselves may be original image constituent signals, processed signals, or a combination) into a T_{D} number (S_{D} < T_{D}) of channels. S_{A} may exceed N, such as due to an earlier disaggregation without any aggregation and S_{D} may exceed M due a subsequent aggregation. Some embodiments have S_{A} = 2, S_{D} = 1 and T_{D} = 2. However, architecture 100 allows many signals to be aggregated which can produce a sufficiently strong signal that it may be disaggregated into many channels, each of sufficient strength for use in the implementation. Aggregation of signals follows from aggregation (e.g., joining, merging, combining, or the like) of channels or other arrangement of adjacent channels to permit joining, merging, combining or the like of signals propagated by those adjacent channels and disaggregation of signals follows from disaggregation (e.g., splitting, separating, dividing, or the like) of a channel or other channel arrangement to permit splitting, separating, dividing or the like of signals propagated by that channel. In some embodiments, there may be particular structures or element of a channel to aggregate two or more signals in multiple channels (or disaggregate a signal in a channel into multiple signals in multiple channels) while preserving the signal status of the content propagating through matrix 130.

There are a number of representative channels depicted in FIG. 1. Channel 135 illustrates a channel having a single input and a single output. Channel 135 receives a single original image constituent signal 115ₖ and produces a single display image primitive 120ₖ. This is not to say that channel 135 may not perform any processing. For example, the processing may include a transformation of physical characteristics. The physical size dimensions of input of channel 135 is designed to match/complement an active area of its corresponding/associated DIPP 110 that produces image constituent signal 115k. The physical size of the output is not required to match the physical size dimensions of the input - that is, the output may be relatively tapered or expanded, or a circular perimeter input may become a rectilinear perimeter output. Other transformations include repositioning of the signal - while image constituent signal 115₁ may start in a vicinity of image constituent signal 115₂, display image primitive 120₁ produced by channel 135 may be positioned next to a display image primitive 120ₓ produced from a previously "remote" image constituent signal 115ₓ. This allows a great flexibility in interleaving signals/primitives separated from the technologies used in their production. This possibility for individual, or collective, physical transformation is an option for each channel of matrix 130.

Channel 140 illustrates a channel having a pair of inputs and a single output (aggregates the pair of inputs). Channel 140 receives two original image constituent signals, signal 115₃ and signal 115₄ for example, and produces a single display image primitive 120₂, for example. Channel 140 allows two amplitudes to be added so that primitive 120₂ has a greater amplitude than either constituent signal. Channel 140 also allows for an improved timing by interleaving/multiplexing constituent signals; each constituent signal may operate at 30 Hz but the resulting display image 120₂ primitive may be operated at 60 Hz, for example.

Channel 145 illustrates a channel having a single input and a pair of outputs (disaggregates the input). Channel 140 receives a single original image constituent signal, signal 115₅, for example, and produces a pair of display image primitives - primitive 120₃ and primitive 120₄. Channel 145 allows a single signal to be reproduced, such as split into two parallel channels having many of the characteristics of the disaggregated signal, except perhaps amplitude. When amplitude is not as desired, as noted above, amplitude may be increased by aggregation and then the disaggregation can result in sufficiently strong signals as demonstrated in others of the representative channels depicted in FIG. 1.

Channel 150 illustrates a channel having three inputs and a single output. Channel 150 is included to emphasize that virtually any number of independent inputs may be aggregated into a processed signal in a single channel for production of a single primitive 120₅, for example.

Channel 155 illustrates a channel having a single input and three outputs. Channel 150 is included to emphasize that a single channel (and the signal therein) may be disaggregated into virtually any number of independent, but related, outputs and primitives, respectively. Channel 155 is different from channel 145 in another respect - namely the amplitude of primitives 120 produced from the outputs. In channel 145, each amplitude may be split into equal amplitudes (though some disaggregating structures may allow for variable amplitude split). In channel 155, primitive 120₆ may not equal the amplitude of primitive 120₇ and 120₈ (for example, primitive 120₆ may have an amplitude about twice that of each of primitive 120₇ and primitive 120₈ because all signals are not required to be disaggregated at the same node). The first division may result in one-half the signal producing primitive 120₆ and the resulting one-half signal further divided in half for each of primitive 120₇ and primitive 120₈.

Channel 160 illustrates a channel that includes both aggregation of a trio of inputs and disaggregation into a pair of outputs. Channel 160 is included to emphasize that a single channel may include both aggregation of signals and disaggregation of signal. A channel may thus have multiple regions of aggregations and multiple regions of disaggregation as necessary or desirable.

Matrix 130 is thus a signal processor by virtue of the physical and signal characteristic manipulations of processing stage 170 including aggregations and disaggregations.

In some embodiments, matrix 130 may be produced by a precise weaving process of physical structures defining the channels, such as a Jacquard weaving processes for a set of optical fibers that collectively define many thousands to millions of channels.

Broadly, embodiments of the present invention may include an image generation stage (for example, image engine 105) coupled to a primitive generating system (for example, matrix 130). The image generation stage includes a number N of display image primitive precursors 110. Each of the display image primitive precursors 110ᵢ generate a corresponding image constituent signal 115ᵢ. These image constituent signals 115ᵢ are input into the primitive generating system. The primitive generating system includes an input stage 165 having M number of input channels (M may equal N but is not required to match - in FIG. 1 for example some signals are not input into matrix 130). An input of an input channel receives an image constituent signal 115ₓ from a single display image primitive precursor 110ₓ. In FIG. 1, each input channel has an input and an output, each input channel directing its single original image constituent signal from its input to its output, there being M number of inputs and M number of outputs of input stage 165. The primitive generating system also includes a distribution stage 170 having P number of distribution channels, each distribution channel including an input and an output. Generally M = N and P can vary depending upon the implementation. For some embodiments, P is less than N, for example, P = N/2. In those embodiments, each input of a distribution channel is coupled to a unique pair of outputs from the input channels. For some embodiments, P is greater than N, for example P = N ^{∗} 2. In those embodiments, each output of an input channel is coupled to a unique pair of inputs of the distribution channels. Thus the primitive generating system scales the image constituent signals from the display image primitive precursors - in some cases multiple image constituent signals are combined, as signals, in the distribution channels and other times a single image constituent signal is divided and presented into multiple distribution channels. There are many possible variations of matrix 130, input stage 165, and distribution stage 170.

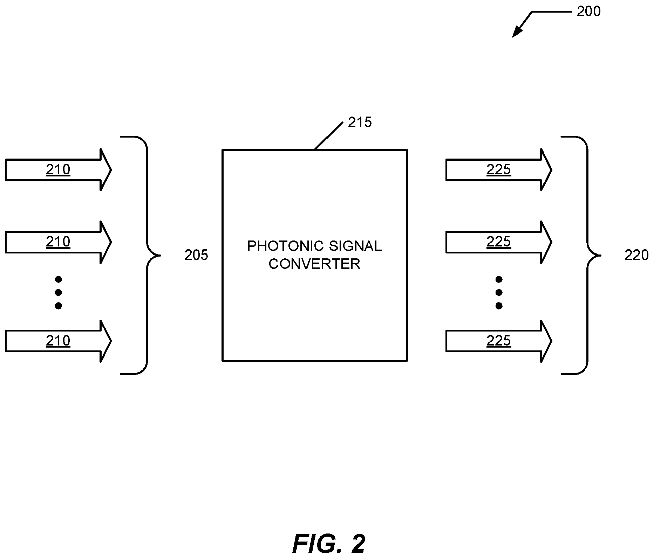

FIG. 2 illustrates an embodiment of an imaging system 200 implementing a version of the imaging architecture of FIG. 1. Systems 200 includes a set 205 of encoded signals 210, such as a plurality of image constituent signals (at IR/near IR frequencies) that are provided to a photonic signal converter 215 that produces a set 220 of digital image primitives 225, preferably at visible frequencies and more particularly at real-world visible imaging frequencies.

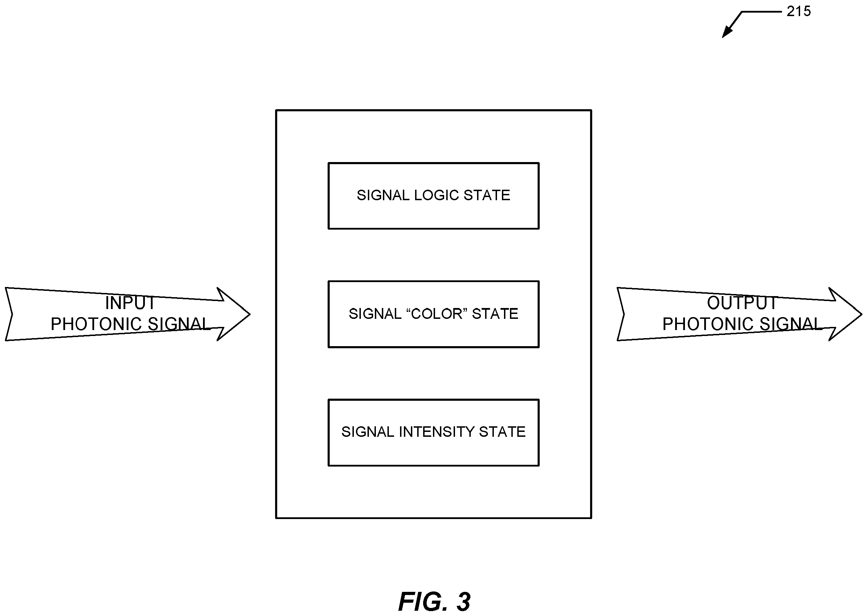

FIG. 3 illustrates a general structure for photonic signal converter 215 of FIG. 2. Converter 215 receives one or more input photonic signals and produces one or more output photonic signals. Converter 215 adjusts various characteristics of the input photonic signal(s), such as signal logic state (e.g., ON/OFF), signal color state (e.g., IR to visible), and/or signal intensity state.

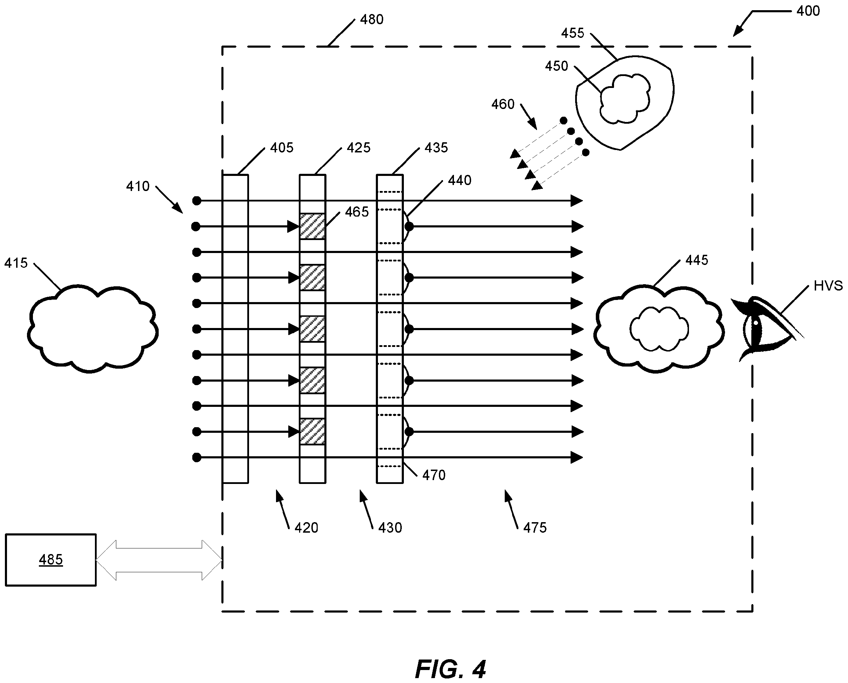

FIG. 4 illustrates a particular embodiment using the imaging architecture of FIG. 1 implementing an enhanced reality (ER) wearable visualization solution 400. Solution 400 includes a monocular implementation however other implementations may include a binocular implementation, such as for example, including a pair of the monocular solutions coordinated for concurrent use with two eyes of a user. Solution 400 may, in some embodiments, be described as an enhanced reality (ER) optics system using front projection. The ER optics may include features of both augmented reality and virtual reality.

Solution 400 includes a real-world interface 405 receiving real-world electromagnetic radiation 410 from a real-world scene 415. Interface 405 is optional and processes radiation 410 based upon design goals and other implementation details. Interface 410 passes processed real-world electromagnetic radiation 420, when present, that is received by a filter 425.

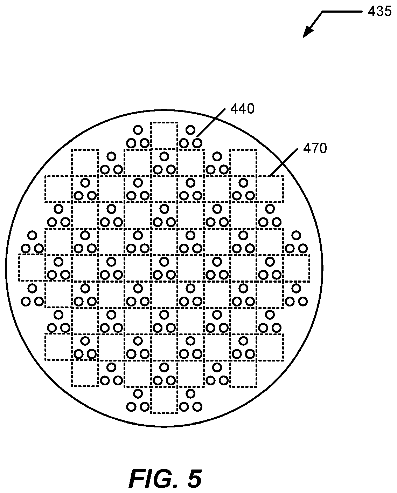

Filter 425 performs several functions including spatial masking and frequency selection. Filter 425 produces masked real-world electromagnetic radiation 430 from radiation 420. Radiation 430 is processed by an anti-Stokes-type backplane 435 that includes a set of distributed anti-Stokes-type emitters 440, for example presented in an ordered matrix. These emitters 440 are responsive to electromagnetic radiation within a region of electromagnetic spectrum. In solution 400, this region is the infrared spectrum but may include other regions in addition to, or in lieu of, the infrared spectrum such as near-infrared spectrum. FIG. 5 illustrates an embodiment of up-converting backplane 435 used in the ER wearable visualization solution illustrated in FIG. 4.

As illustrated, solution 400 provides emitters 440 tuned for use with IR. As explained below, the set of emitters 440 produce a virtual image that is combined with radiation 430 to produce an enhanced reality visualization 445 for a human visual system (HVS). The virtual image is produced in response to an IR image 450 from an IR projector 455 projected, using infrared radiation 460, onto the set of emitters 440. Visualization 445 is responsive to a composition of real-world scene 415 and IR image 450.

Radiation 410 may, and often does, include some IR components. To reduce or eliminate a possibility that radiation 410 may activate any emitter 440, filter 425 provides a set of masking regions 465 that block a portion of radiation 420 that would be incident on the set of emitters 440 during operation. In this implementation, without more, radiation 410 becomes pixelated with alternating regions of scene 415 and blackness (absence of radiation). Radiation 430 includes these alternating regions of signal and absence of signal (with absence of signal corresponding to locations of emitters 440 on backplane 435.

Backplane 435 may be implemented in many different ways. In one embodiment, backplane 435 is transparent to radiation 430 with masking regions 465 producing a set of windows 470 that are distributed between emitters 440. Each window 470 may pass a portion of radiation 430 that includes unmasked portions of radiation 420.

Backplane 435 thus produces a set of visualization radiation 475 that includes radiation 430 through windows 470 and radiation defining the virtual image resulting from activation of emitters 440 from radiation 460.

A housing 480 packages and supports components of solution 400. Preferably housing 480 provides a radiation-proof (e.g., for visible and portions of the IR spectrum used by emitters 440) package that may be held or worn by a user. Some embodiments of solution 400 may include a controller 485 associated with housing 480. Controller 485 may be associated in a number of ways including a complete integration into housing 480, an external coupling to components of solution 400, and/or variable integration of elements of controller 485 with housing 480 or other elements of solution 400. Controller 485 may provide one or more control signals for elements of solution 400 to achieve the described and suggested controlled and controllable features and aspects. Controller 485 may include a stored program computing system having one or more processors implementing instructions retrieved from a memory to achieve the control and operation of solution 400.

Interface 405 may include amplitude modulation (e.g., dimming) of radiation 410 and in some cases that amplitude modulation may be dynamic to improve a quality of visualization 445, such as by matching an average brightness of the virtual image. In some cases, interface 405 may provide a polarization filter in addition or in lieu of amplitude modulation.

Filter 425 in cooperation with optional interface 405, pixelates incoming light from the real world that faces the HVS (user). The pixelation is complementary and aligned with the set of emitters 440 of backplane 435.

While the pixelated information from real-word scene 415 is updated at the speed of light, a quality of visualization 445 is impacted by an image quality and switching/update speed of the virtual image.

In this respect, solution 400 employs a Faraday anti-Stokes-type device (FASD) as a virtual image engine. The FASD includes two components - the IR illuminator that produces the invisible IR image at speeds that may many orders of magnitude faster than visible images may be produced and the set of emitters 440 that perform an up-conversion of the invisible IR image to make it visible without significantly degrading the switching speed of the IR image.

There may be many different ways to implement the IR illuminator. One way is provide a hybrid magnetophotonic crystal (MPC) pixel array to produce an array of pixels (or sub-pixels) depending upon the design choices and color implementation architecture. Each pixel element may include an "ON" state and an OFF" state, and these states for individual elements may be switched very quickly using magnetic fields and the Faraday Effect. Further, each state may be encoded and magnetically latched to make it bi-stable, becoming a modulator or switch array. In this context, this refers to a characteristic where each individual pixel element is independently addressable and may be pulsed extremely quickly to set a desired state (e.g., ON or OFF) where it becomes latched and the pixel element will thereafter remain in the latched state until the state is changed.

A benefit of this bi-stable implementation with fast switching speed is that pixel logic may be implemented to provide a functional equivalent to substantial file compression. That is, the IR illuminator may produce a series of IR image frames, each IR image frame need only define updates to pixel/sub-pixels that have changed from one frame to the next. Each frame is thus appreciably smaller than native physical resolution would be as those set the state of each pixel/sub-pixel every image frame. All pixels/sub-pixels are not addressed continuously and not all pixels/sub-pixels are addressed each frame. With this effective "compression" of the series of frames (e.g., a frame file), the speed of solution 400 as compared to other imaging solutions at the same resolution may be much faster or, given the same speed budget, the effective resolution of solution 400 may be much improved. Different embodiments may tune these performance benefits differently for any implementation.

Another feature that may be implemented in some FASD embodiments is implementation of natural gradient foveation natively in hardware/software without additional mirrors, no hard edges to foveation patches, and larger foveation areas such as may be done in a gaze contingent imaging (GCI), space variant imaging (SVI) solution or other fixation point tracking, estimation, determination, processing, or calculation solution. Foveation in this context refers to a digital image processing technique in which a resolution of an image, or an amount of detail, varies across the image according to one or more "fixation points." A fixation point indicates the highest resolution region of the image and corresponds to the center of the eye's retina, the fovea. Solution 400 may include best available foveation software/algorithms and eye tracking solutions for HVS.

A conventional foveation solution often includes lag that can be due to mirror speeds, hard edges to foveation patches that include sharp-edge resolution drop off among other performance issues. An equivalent, in normal human vision terms, is that conventional foveation systems offer a compromised visual system some liken to a form of astigmatism.

In contrast, solution 400 may include an enlarged foveation area having reduced lag that counters the negative astigmatismic perception. Further benefits may arise from implementation of a natural gradient mimicking a true HVS in operation that can track exceptionally well with a speed of reflex that may be captured in a frame file. Such a solution may offer benefits for foveation that may include frame file reduction, rendering load reduction, eyestrain reduction due to eye muscles trying to respond to the image properly. This eyestrain may be caused by an unnatural limitation of a focal zone that can be common in a conventional solution which may be improved by some embodiments of solution 400.

There are many different possible ways of implementing this IR illuminator, some implementations may be able to perform about an order of magnitude 1,000,000 times faster (or more) as compared to switching of individual pixel elements using other technologies including liquid crystal display (LCD) technology and 1,000 times faster than digital mirror device (DMD) technology. Further, the IR illuminator may be scaled very small, with the MPC modulator providing pixel logic arrays capable of defining pixel pitch that are sub-micron, with further developments reducing this even more. Many embodiments may share common features of quantified polarization rotation while being solid-state, relatively temperature-stable, and much faster (e.g., order of magnitude 1,000,000 times faster than LCD and 1,000 times faster than DMD) than common conventional display technologies.

Paired with the IR illuminator is backplane 435 which includes emitters 440 responsive to the IR image and windows 470 allowing real-world radiation pass through. In this way radiation 475 for production of ER visualization 445 may include radiation 430, radiation defining a virtual image from emitters 440 that respond to radiation 460, or a composition of both in which radiation from the real-world is interleaved with radiation from the up-converted IR image.

As illustrated, solution 400 includes a transmissive-emissve architecture. That is, IR radiation from an IR source (e.g., a light emitting diode (LED) or LASER for example) is transmitted through the MPC with selectively controllable magnetic fields applied (e.g., the Faraday Effect) to control a polarization and thereby a signal amplitude. There are systems where the IR may be reflected through the MPC which enhances the Faraday Effect while increasing complexity somewhat as more discrete devices are often required or desired for many solutions 400. The transmissive mode may offer efficiency advantages be included as part of a high-dynamic range system.

In some embodiments, such as when the IR includes a sufficiently powerful (e.g., high amplitude) and in addition coherent source such as the LASER, there may be a concern of allowing a direct line-of-sight from the HVS to this source. For example, a goal may be to eliminate or reduce radiation 460 from radiation 475. Solution 400 provides that radiation 460 is directed away from HVS and incident on emitters 440. In this way radiation 475 includes portions of real-world radiation 410 (which may be amplitude controlled) and visible radiation from emitters 440 and to a degree necessary, little to no components of radiation 460. A short-hand way to refer to this is that the location of the IR illuminator(s) and it/their arrangement within solution 400 is/are non-aligned with line-of-sight of the HVS (i.e., off-axis radiation source(s)). The off-axis radiation sources may provide that the IR illuminators be forward, behind, or both, relative to backplane 435 and the HVS. Illustrated in FIG. 4, solution 400 includes a "forward" mode IR illuminator with IR projector 455 and HVS both to the right of backplane 435. Projector 455 could, in some implementations, be located to the left (or behind) backplane 435.

Some embodiments and implementations, including some off-axis arrangements, may benefit from use of optional corrective optics, such as in IR projector 455 and/or a set of compositing viewing optics processing radiation 475 for HVS. In other contexts in the imaging field, a version of these corrective optics are known, such as adaptive optics or negative index options for calibration and producing flat or "folded" total internal reflection (TIR) optics. More specifically, TIR prism optics that may be employed in flat/folded optics solutions and in off-axis systems. TIR prisms and/or adaptive optics may be used in cooperation with a micro-projector part and on a receiving optic structure.

After modulating the IR array to produce the IR image, that image may be projected onto backplane 435. The IR image interacts through an anti-Stokes-type or up-conversion process with emitters 440 to emit higher energy, shorter wavelength radiation in response to the IR image. The IR image is typically invisible but in some cases it may be barely or faintly perceptible to some observers.

The IR image may be produced in several ways as noted herein. In one way, the IR image is produced in a monochromatic format where the entire IR image is a single color with different parts of the IR image having different signal amplitude (e.g., binary or "gray-scale"). In this case, emitters 440 up-convert the IR image into a monochromatic image in a visible frequency. In other embodiments and implementations, the IR image may implement a particular color architecture (e.g., a three-color architecture having three distinct "primary" IR colors). These IR colors are mapped to a visible three-color architecture, in some embodiments, different emitters 440 may be responsive to different ones of the three-color IR colors to provide one of three different visible colors (e.g., R, G, or B of a visible RGB architecture). Other architectures may employ a greater or fewer number of frequencies as compared to three.

There may be many different implementations for each emitter 440, and it is the case that different emitters 440 for responding to different IR frequencies may employ different up-conversion technologies, processes, or parameters. Performance of the visible up-converted IR image may be measured in many different ways. In the architecture illustrated in FIG. 4, each color "pixel" is represented by three separate sub-pixels (i.e., emitters 440). Each emitter 440 is illustrated as an up-converting nano-phosphor. However there are many different alternatives to the up-converting nano-phosphors which may include quantum dots, nanotubes, other anti-Stokes-type materials, processes, or methods, or other up-converting materials, processes, and methods.

Performance of backplane 435 and of the set of emitters 440, may depend upon individual performance of a sub-pixel. And that performance in turn is based upon a tuned synergy between the IR illuminator, the particular IR frequencies for each "color" component, and the technology of each responsive emitter 440. And as noted, performance may be measured in different ways with a different performance metric often requiring use of a different technology.

In contrast, embodiments of the present invention contemplate that each solution 400 may define a hybrid aggregation that is tuned for the particular metric. A different metric may allow for use of the same or substantially same structure with different priorities for tuning. For example, the MPC modulator/switch may perform differently for different IR frequencies, different MPC technologies may affect different IR frequencies differently, and different up-conversion materials may favor better performance with different IR frequencies.

This may allow that each color element of each up-converted IR image could be implemented with different IR frequencies, MPC materials, and different up-conversion materials, structures, or processes. Much of the basic architecture is preserved for the different implementations but different elements, materials, or components are used in the same basic architecture. In other cases, wildly different implementations may be desired when selecting the best production of the IR image and the subsequent up-conversion to a visible image. These variations may be between different solutions, different IR frequencies in the same solution, different MPC materials for different IR frequencies, and/or different up-conversion materials, processes, structures for different IR frequencies. There are many different options to allow solution 400 to meet a wide range of performance metrics.

In some embodiments and implementations of solution 400, it may be desirable or required to include an option for reducing the real-world pixelation arising from backplane 435 having a distributed set of emitters 435 and windows 470 that may be provided in interstices between adjacent emitters 440. Different options may include use of one or more of a set of microlenses (e.g., an array), optical "funnel array," channelization shaping, reduction in an areal component of one or more of emitters 440, or other structure, process, or method for increasing an amount of the real-world scene which may be available for compositing with up-converted radiation to produce visualization 445. Some channelization shaping options are described in one or more of the incorporated references.

These elements may be implemented, for example, by a separate optical structure disposed in solution 400 before filter 425, modification of one or more of interface 405, filter 425, and/or backplane 435, and/or a combination of these elements in an integrated, semi-integrated, or discrete solution. A function of these elements is to visually "compress" more real-world information through windows 470 to reduce the pixelation.

For example, in these array solutions, each array may include a closely-packed array that is denser than the components illustrated in FIG. 4 and FIG. 5, such that the lens and/or funnel are packed up more closely to each other edge-to-edge.

A function of these structures is to capture and then compress the large field-of-view of the real-world pass-through pixel in a channel. FIG. 4 and FIG. 5 illustrate a solution having no obvious real-world compression. Therefore a physical areal size of each masking region 465 times the number of such regions divided by a total active area of backplane 435 defines a blocking metric as a percentage of the total viewable real-world scene. Without compression, the blocking metric may be N% (e.g., 50%) which is effectively illustrated in FIG. 5 in which each emitter 440 takes up about the same area as each window 470. Simply reducing an area associated with emitters 440 would be one way to reduce pixelation. This could be done by decreasing a quantity or an aggregate size of emitters 440 such that the blocking metric is reduced (e.g., 30%).

Other solutions, such as the various arrays and channelizations, may provide an increase in an effective cross-section for window 470. This effective cross-section provides a multiplier greater than 1 for the total areal size of windows 470. That is, in the example above with a 50% blocking metric, use of various optical solutions (e.g., the various arrays described herein) associated with windows 470 increases the apparent areal size of the aggregated windows 440 and thereby reduces the blocking metric to less than 50%. Thus more real-world radiation 410 is capable of being passed through backplane 435 which effectively reduces the masking and the pixelation effect of reducing any negative consequence from the masked regions. The optical solutions in this case may include various pixelation manipulation features, such as to alter the blocking metric

In some embodiments, windows 470 may create various image artifacts (e.g., edge effects) for unmasked radiation passing therethrough. Various elements, such as the various optic arrays, may provide a manipulation of these artifacts which may include a reduction or an elimination of such artifacts. Thus the various optics in this case include artifact manipulation features.

Some embodiments of solution 400 may include optics components that include one or both of such artifact manipulation and pixelation manipulation features.

As noted herein, solution 400 may include many different formats including a monocular format and a binocular format. Solution 400 has been described in a monocular format (e.g., HVS consists of a single eye viewer). Solution 400 could be described in terms of various binocular formats with HVS including, for example, a pair of eyes viewer. One binocular format may allow for both eyes to view a single visualization 445. Other binocular formats may allow for a pair of visualizations 445, one for each eye. This may be implemented as a stereoscopic or holographic solution with a visualization channel for each eye. One or more of the components illustrated in FIG. 4 of solution 400 would be duplicated for each visualization channel and the other non-duplicated elements cooperating together on common elements for each visualization channel.

### A SYSTEM BASED ON MODULATION IN IR, an OPTIMAL FREQUENCY, combined with Advanced Anti-Stokes-type Up-conversion for Color

A majority of the powerful modulation methods in photonics operate in frequency-dependent materials systems and perform best, if at all, in IR or near-IR - the reason why the Internet operates in this frequency regime - Applicant posed a question: why not create a new type of display system which would make it possible to employ modulation methods such as advanced hybrid magneto-photonics and Mach-Zehnder-based switches, operating in the IR frequencies they excel at, and combine them with efficient "anti-Stokes-type" frequency up-conversion methods to realize visible pixels and efficient full-color displays?

An insight implemented in some embodiments was to treat a display as a network of distributed devices and apply telecom-network architecture thinking to the problem of realizing next-generation display performance and features unobtainable by any existing technology on its own, and operating on a base system frequency that is by definition, lower-energy IR, and only up-converting when required.

This innovative architecture and strategy resulted in a cascade of other innovations, including multiple display types, the first of which, the FASD ("Faraday anti-Stokes display"), can be seen as a continuation of the CRT and a fulfillment of the promise of the aborted FED ("field emission display").

The FASD can also be seen as a kind of inversion of the structure of the otherwise successful niche display type, the LPD (laser phosphor display), known for its superior color gamut, viewing angle, and low power (compared to OLED and LCD) - but without all the limitations, including size.

IR-DEPENDENCY TURNS FROM A LIMITATION TO A STRENGTH, ENABLING FURTHER INNOVATIONS IN AR/VR SYSTEMS, NIGHT VISION, and YET ANOTHER NEW DISPLAY TYPE.

Many further benefits flowed from this system-level innovation, including displays based "solely" on tunable frequency modulation operating on invisible IR/near-IR, with the base system frequency in the IR/near-IR range, and AR/VR systems leveraging the separation of the IR pixel-state encoding phase and the anti-Stokes-type up-conversion phase.

The CRT, field emission displays (FED, including the carbon-nanotube-based SED/NED), and plasma displays are all well-known display types with a fundamental basis in electron excitation of phosphors to produce photons in the visible color frequency regime. Such systems are known for their color gamut, contrast and brightness, and refresh/frame rate.

In addition to the present FASD system, the other most recent member of this family is the Laser Phosphor Display (LPD).

As reflected in the name, the LPD is based on phosphor absorption of input photons, visible or low-end UV frequency, and then emission of lower energy visible frequency photons in the phosphor materials, but broader bandwidth and dispersion, known as the "Stokes-shift." The LPD system, as it is by nature constrained to be, is a rear-projection television system which requires use of a DMD chip, such as a DLP chip, to direct highly-collimated laser light to the phosphor screen.

The LPD system is only practical over a very limited range of sizes for rear-projection television applications, and with case/panel depth in addition makes these displays bulky and unwieldy compared to LCD, OLED, or plasma displays. That lasers are a practical necessity for such an RPTV system, with the distances from chip to phosphor screen, further limits the application, and UV lasers, in addition, pose additional hazard to the human visual system - thus making it impossible to use UV, invisible to the human eye, in any near-eye system. And use of violet-adjacent UV light is only an incidental artifact of a visible-visible Stokes-shift system, which a broader band profile of visible violet laser output incidentally includes some adjacent UV, within an overall set of visible frequencies exciting phosphors in order to broaden the color gamut beyond narrow-band lasers and with emission angles from phosphor materials which enable very wide viewing angles. Such a Stokes-shift paradigm is essentially a band-broadening and angle of surface photon emission-increasing technique.

The advantages of the LPD for its range of practical large but not giant RPTV sizes is color gamut, brightness, contrast and power utilization - commercial LPD's use approximately 70% less power than an equivalent OLED or LCD.

FASD is based on a new system architecture for display/pixel arrays: Based on both a distinct, and breakthrough, domain in physics and materials science, which may be broadly termed "anti-Stokes-type" photon absorption-emission frequency shifting, or frequency "up-conversion," the FASD system employs best available, efficient anti-Stokes-type up-conversion methods, of which there are multiple commercial types to choose from and which are integral to the current commercial embodiment - these methods are themselves based on differing physics and distinct physical mechanisms. Best of the class in the broad anti-Stokes-type class of commercial and commercial-ready up-conversion currently are composites of nano-phosphors and other nano-materials.

Working in the lower-energy IR regime as the base-system-state offers the additional advantage of being invisible to the human eye, enabling a number of unique configurations, including near-eye front and rear projection AR/VR, both free-space and encapsulated, which are impossible to the pre- nanotechnology of LPD - and as is also impossible for other known display technologies and AR/VR optics systems.

By further contrast with LPD, the FASD system employs a pixel-logic (on/off) modulation technology, hybrid magneto-photonics, which operates optimally at IR, and which is superior in all respects and according to all key performance parameters compared to the exclusively chip-scale solution of DMD, with lower- and upper- limits on pixel pitch which restrict both resolution and physical scaling of the image.

And FASD is commercially in contract to ship as integrated devices, combining LED illumination, HyMPC pixel-logic, and anti-Stokes-type up-conversion for direct-view display panels of all sizes, as well as detaching the stages/components for spatially-separated/sequential configuration, such as front -and rear-projection.

LED is a source of illumination of proven efficiency, by most criteria, for transmissive displays in general, including LCD. Low-resolution addressing of LED backplane illumination is employed by Dolby as a key element of a high-dynamic range system, working in conjunction with the primary LCD pixel array.

Addressable OLED and mini-LED addressable LED's have, on some criteria, proven advantages over LCD and LCoS, with their practical pixel pitch range and range of gross physical dimensions.

LED as used backplane illumination source operating in a steady-state at infrared frequency(s) has efficiency advantages over addressable visible pixel OLED or mini-LED, which is required to cycle completely through the less-efficient range of the power curve each time they are turned fully-on and fully-off.

The present FASD system transitions through the relatively inefficient early portion of the LED power curve only when the system is powered-up, and each pixel in the system is only boosted to higher-energy/higher frequency photon outputs when needed, in contrast to LED-backlit LCD.

FASD uses LED in its most efficient operating regime - more efficient to be always on at IR then constant on/off power down/up cycles, and using LED to directly generate the higher-energy visible frequency photons. A similar differential analysis applies to OLED.

One of the reasons for the low power utilization characteristic of E-Ink and many other E-Paper displays, along with being reflective displays, is that a pixel only needs an initial setting pulse from the addressing electronics to set the state of the pixel, e.g., "on" or "off," and the pixel stays in that position without requiring continuous power to the addressing electronics at that pixel/sub-pixel location.

The higher the resolution and the larger the gross area, the more important this benefit is to any system which possesses it, both in speed of addressing electronics and power utilization.

FASD, like those slow, B&W E-paper display technologies, features pixels with "memory": only a short, sub 15 nanosecond pulse is required to change the on/off setting of the pixel/sub-pixel group. That setting while persist, like a magnetic memory element, without requiring continuous power to the pixel addressing electronics.

This efficiency marks a significant contribution to the overall power efficiency of a FASD device, along with the IR base-frequency + anti-Stokes-type (selective) up-conversion.

Regarding setting a state of one or more elements of the IR projector (e.g., ON and OFF), some embodiments may use a light valve including a "pixel logic device" to encode the pixel state setting of "on" and "off' (or on with varying intensity) with hybrid magneto-photonics, based on the classical magneto-optic Faraday Effect.

Like an LCD, some embodiments may rotate polarized light, but we use magnetic fields and solid state, relatively simple-to-manufacture switches which work an order of magnitude 1,000,000 faster versus LCD (and an order of magnitude 1,000 times faster than DMD), use less power, and are far more rugged and color stable through a wide range of operating temperatures and optical power intensities. (in the most commonly-used and best performing (in bulk form) materials class, iron-garnet materials, the higher the temperature, the better the performance).

Unlike an LCD, in one version of hybrid MPC switches used in some embodiments, solution 400 may dispense with opposing polarizers. Among the advantages of this version are therefore one less optical component contributing loss in the optical chain. In the classic Faraday Effect-based switch setup, the solid-state magneto-optic polarization-rotator is placed between opposing polarization filters, a "polarizer" and an "analyzer," and the default setting (no power) in this configuration is thus "off." A useful, but opposite configuration, places the rotator between to duplicate polarizers, resulting in a default "on" configuration.

Also unlike LCD or virtually any other light valve other than very slow, B&W E-paper light valve technologies, our switches are bi-stable, which means they maintain their state (whether a two-state binary system, or multi-variant/analog system) after only a short, su-15 ns application of low power to the rotator.

An embodiment of a "telecom structured/pixel-signal processing architecture," the FASD system, specifies use of the most efficient IR illumination source, LED. However, for particular applications which require laser, FASD can employ laser as well/ in addition to LED.

At present, a best-in-class of the broadly anti-Stokes-type up-conversion technologies/systems are to be found in the extremely well-developed and understood category of nano-phosphors and certain other nano-materials in combination (and which can be without any actual material in the generally familiar, chemically-categorized phosphor family, but rather materials/systems which exhibit anti-Stoke up-conversion from lower energy photons to higher-energy photons, such as a 2:1 up-conversion).

Visible color is thus generated emissively at the nano-phosphor composite stage, which contributes the known virtues of such emissive systems in color gamut, brightness, contrast, and viewing angle, among other benefits. This makes FASD a two-step, transmissive then emissive, or "trans-emissive," system.

Voltage-driven spin-wave addressing (magnonics): Some embodiments may employ extremely high-performance voltage-driven spin-wave addressing (magnonics) in its component magneto-optic arrays, providing a foundational and unique high-speed addressing architecture for its various products.

Wireless addressing and powering of distributed arrays: in a revolutionary new solution to addressing device arrays and collections of all kinds, US Patent Application No. 15/186,404 and US Patent Application No. 15/282,862, the contents of which are hereby expressly incorporated by reference thereto in their entireties for all purposes have created a system of wireless addressing and powering of distributed arrays. In this system, conducting interconnect is either partially or completely eliminated, and among other benefits, the addressing system is no longer a limitation on the resolution of arrays of pixels/sub-pixels (or sensors or other devices), nor on the maximum area of any array or collection of devices, because drive electronics as such are replaced. This innovation may have a profound impact on power utilization/cost of operation, cost of manufacture, device density, weight, and bulk, among other parameters, and not just for addressing and powering pixel modulators.

Impact of memory pixels (bi-stable/stable pixels/subpixels): Because such "memory pixels" need only be addressed when there is a change to their state, rather than requiring refreshing every frame/duty-cycle, there are statistically significantly fewer sub-pixel locations that need addressing in any given frame/duty cycle. This reduces loads and resistance down the rows/columns, and the easier it is for drive electronics to match native switching speed and drive higher resolutions, because each sub-pixel does not need to be constantly re-addressed during each frame/duty cycle. Higher resolutions and larger display areas are thereby enabled, and frame file-sizes and data-rate demands on CPUs and GPUs are reduced.

Utilization of gradiated foveation and eye-tracking software with this bi-stable system provides further opportunities to reduce frame file sizes, as the peripheral/non-focal areas of the total field of view can thus be of lower resolution, with fewer changes to be made to subpixel-states each frame/cycle while those regions remain peripheral.

For some conventional foveation systems, a motivation for implementing some of the additional complexities of selective variable resolution may be due to limited display/resolving speed and/or costs of controller elements for implementing non-foveated conventional solutions. Improved embodiments of the present invention having improved display/resolving speed may use foveation in more limited fashion (e.g., providing wider field of view, less off-focus resolution degradation) and be driven primarily by controller component costs.

To implement a strategy of combining multiple technologies to achieve performance levels beyond the capability of any one technology or device, some embodiments may include optics and substrate systems solutions which enable merging pixel-signals in consolidated channels, as well as pixel-signal-routing through 3D multilevel device/optics structures, including 3D structured substrates, including US Patent Application No. 15/457,980 whose contents are hereby expressly incorporated by reference thereto in its entirety for all purposes.

Three-dimensional (3D) multi-tiered device/optics structures, including 3D-structured substrates and inter-layer photonic vias, have provided other essential building blocks for realizing the broad telecom-structured pixel-signal processing architecture, and also have particular benefit to FASD systems and our AR/VR optics/systems solutions.

It is essential to the understanding of some embodiments of the system to recognize that the spatially-separated, multi-stage process of ultimately generating photons at visible frequencies does not in any way by its nature imply an additional energy requirement simply because of the spatial (and temporal) separation of the ultimate photonic generation into more than one stage/location. From a base-state of any display system as such, any materials system/photon generation process or device must elevate the energy level of electrons one way or another to ultimately generate photons at the energy levels of visible light.

In some embodiments including a pixel-signal processing architecture, and in the specific FASD system, instead of this energy state "pumping" occurring "at the beginning" of the system output sequence, and entirely "within" the complex of materials of the LED, OLED or laser devices, (each with their constituent parts), in the FASD IR LED is employed where it is most efficient, in IR, and then further pumping of the energy regime occurs when photons initially generated by the IR LED interact with the specially designed/tuned anti-Stokes-type up-conversion materials/devices. It can be further noted that multi-step photo-electric energy state conversion does occur "locally," in a single device, in at least some cases of the "in-situ," seemingly unitary but actually more complex photon-energy-level elevation processes involved of LED/OLED/laser.

Critically, of course, and out of sequence compared to any other display system, in the FASD system the pixel-logic state encoding may occur in-between the stages of photon-energy level augmentation to generate visible frequency system output photons, and as a deliberate and systemic application of a telecom-type operating IR frequency system design choice.

It is a matter of comparative efficiency of any given physical mechanism for up-conversion, as any system progressively raises the energy of photons/electrons/holes, and the combination of LED for one stage and pumped nano-phosphors for a later stage is not in principle less efficient than constraining all the energy state elevation to seemingly one mode and single device locus, such as an LED or OLED device.

In fact, by de-constructing the photon energy level elevation into discrete stages, as in the FASD system, there is the opportunity to employ best-in-class methods for each stage/context.

In fact these efficiency gains, by specialization, are expected for different FASD versions, which combines techniques best-performing, not only for each category of modulation, but at each frequency band - i.e., different methods will be employed in materials composites/device designs for each sub-pixel assigned the task of up-conversion for a given band of the visible frequency. Just as FASD separates the system-base drive frequency generation means (best in class being currently LED), from higher-frequency up-conversion, on-demand, (generally, a task best performed by optimally-efficient anti-Stokes-type nano-phosphor composites, so discrete portions of that overall visible frequency regime will be matched with an optimal composite type.

In turn these efficiency gains are amplified by the boundary-condition effect of implementing a lower-energy level IR source as a steady-state driving frequency, and then at the boundary inputting only the incremental energy needed for a given energy level elevation (production of visible frequency photons, at varying energy levels from bottom red to top violet.

Lastly, speed is also a critical criteria for what method is best suited for performing frequency modulation at the higher energy/visible frequency levels, and there is a wide range of methods which are faster, and in fact in some cases orders of magnitude faster, than LED or OLED for this critical up-conversion response component of overall native pixel switching speed.

Multiple anti-Stokes-type methods are available which, order of magnitude, can match some native modulation speeds of hybrid MPC's, and this matching affords additional efficiencies for the system, not possible without it.

### A DESCRIPTION OF A SYSTEM AND ARCHITECTURE, OF WHICH THE FASD AR/VR HYPER-REAL WEARABLE VISUALIZATION IS AN EXAMPLE

"Telecom-structured Pixel-signal Processing Network Architecture," (TPPNA). This is a pixel signal modulation and distribution architecture, which is said to be "telecom-structured," and which manifests in both local (in a single device) and distance/remote (wide-area pixel-signal distribution) forms.

N.B. The incorporated "telecom-structured/pixel-signal processing architecture" includes an infrared base system-state frequency, because of the preponderance of modulation and other /optics technologies which are materials system/frequency dependent at IR or near-IR. Additional advantages of a base-supply of wave/far field EM energy at IR/near IR in the system architecture will be for supplying the same working frequency of convenience for the drive frequency of other photonic devices in the overall systems, including for PIC logic (PIC = "photonic integrated circuits") and memory. These are near-future additional system benefits that may accrue from being forward-prepared for the advent of photonic integrated circuits requiring supply of the same base-system optical frequency.

While particular embodiments have been disclosed herein, they should not be construed to limit the application and scope of the proposed novel image display and projection, based on de-composing and separately optimizing the operations and stages required for pixel modulation.

The system and methods above has been described in general terms as an aid to understanding details of preferred embodiments of the present invention. In the description herein, numerous specific details are provided, such as examples of components and/or methods, to provide a thorough understanding of embodiments of the present invention. Some features and benefits of the present invention are realized in such modes and are not required in every case. One skilled in the relevant art will recognize, however, that an embodiment of the invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

Reference throughout this specification to "one embodiment", "an embodiment", or "a specific embodiment" means that a particular feature, structure, or characteristic described in connection with the embodiment is included in at least one embodiment of the present invention and not necessarily in all embodiments. Thus, respective appearances of the phrases "in one embodiment", "in an embodiment", or "in a specific embodiment" in various places throughout this specification are not necessarily referring to the same embodiment. Furthermore, the particular features, structures, or characteristics of any specific embodiment of the present invention may be combined in any suitable manner with one or more other embodiments. It is to be understood that other variations and modifications of the embodiments of the present invention described and illustrated herein are possible in light of the teachings herein and are to be considered as part of the spirit and scope of the present invention.

It will also be appreciated that one or more of the elements depicted in the drawings/figures can also be implemented in a more separated or integrated manner, or even removed or rendered as inoperable in certain cases, as is useful in accordance with a particular application.

Additionally, any signal arrows in the drawings/Figures should be considered only as exemplary, and not limiting, unless otherwise specifically noted. Furthermore, the term "or" as used herein is generally intended to mean "and/or" unless otherwise indicated. Combinations of components or steps will also be considered as being noted, where terminology is foreseen as rendering the ability to separate or combine is unclear.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The foregoing description of illustrated embodiments of the present invention, including what is described in the Abstract, is not intended to be exhaustive or to limit the invention to the precise forms disclosed herein. While specific embodiments of, and examples for, the invention are described herein for illustrative purposes only, various equivalent modifications are possible within the spirit and scope of the present invention, as those skilled in the relevant art will recognize and appreciate. As indicated, these modifications may be made to the present invention in light of the foregoing description of illustrated embodiments of the present invention and are to be included within the spirit and scope of the present invention.

Thus, while the present invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope of the present invention. It is intended that the invention not be limited to the particular terms used in following claims and/or to the particular embodiment disclosed as the best mode contemplated for carrying out this invention, but that the invention will include any and all embodiments and equivalents falling within the scope of the appended claims. Thus, the scope of the invention is to be determined solely by the appended claims.

## Claims

1. A wearable enhanced reality visualization system, comprising:
a real-world processor (485) producing a set of real-world signals (420);
an enhanced-world generator (455, 440) producing a set of non-real-world enhancement signals (460), said set of non-world enhancement signals (460) having one or more wavelengths below a visible spectrum of a human visual system; and
a backplane (435) merging a set of contributions (430) from said set of real-world signals (420) and said set of non-real-world enhancement signals (460) to produce an enhanced world visualization (445);
wherein said backplane (435) up-converts said set of contributions (430) below said visible spectrum to one or more wavelengths in said visible spectrum.

2. The system of claim 1 wherein said enhanced-world generator (455, 440) includes a set of reflective anti-Stokes type emitters (440).

3. The system of claim 1 wherein said enhanced-world generator (455, 40) includes a set of transmissive anti-Stokes type emitters (440).

4. The system of claim 1 wherein said one or more wavelengths below said visible spectrum of said human visual system include a set of infrared radiation wavelengths, wherein said enhanced-world generator (455, 440) includes a Faraday Up-Converting Display architecture for processing said set of infrared radiation wavelengths for signal definition of an infrared radiation image (450), and wherein said backplane (435) includes a cooperative set of up-converting emitters (440) up-converting said infrared radiation image (450) to said visible spectrum for production of a visible virtual image merged with said real-world signals (420) by said backplane (435).

5. The system of claim 2 wherein said one or more wavelengths below said visible
spectrum of said human visual system include a set of infrared radiation wavelengths, wherein said enhanced-world generator (455, 440) includes a Faraday Anti-Stokes Display architecture for processing said set of infrared radiation wavelengths for signal definition of an infrared radiation image (450), and wherein said backplane (435) includes said set of reflective anti-Stokes type emitters (440) up-converting said infrared radiation image (450) to said visible spectrum for production of a visible virtual image merged with said real-world signals (420) by said backplane (435).

6. The system of claim 3 wherein said one or more wavelengths below said visible spectrum of said human visual system include a set of infrared radiation wavelengths, wherein said enhanced-world generator (455, 440) includes a Faraday Anti-Stokes Display architecture for processing said set of infrared radiation wavelengths for signal definition of an infrared radiation image (450), and wherein said backplane (435) includes said set of transmissive anti-Stokes type emitters (440) up-converting said infrared radiation image (450) to said visible spectrum for production of a visible virtual image merged with said real-world signals (420) by said backplane (435).

7. The system of claim 1 wherein said enhanced-world generator (455, 440) includes a set of bi-stable display image primitive precursors producing at least a portion of said set of non-real-world enhancement signals (460).

8. The system of claim 2 wherein said enhanced-world generator (455, 440) includes a set of bi-stable display image primitive precursors producing at least a portion of said set of non-real-world enhancement signals (460).

9. The system of claim 3 wherein said enhanced-world generator (455, 440) includes a set of bi-stable display image primitive precursors producing at least a portion of said set of non-real-world enhancement signals (460).

10. The system of claim 4 wherein said enhanced-world generator (455, 440) includes a set of bi-stable display image primitive precursors producing at least a portion of said set of non-real-world enhancement signals (460).

11. The system of claim 5 wherein said enhanced-world generator (455, 440) includes a set of bi-stable display image primitive precursors producing at least a portion of said set of non-real-world enhancement signals (460).

12. The system of claim 6 wherein said enhanced-world generator (455, 440) includes a set of bi-stable display image primitive precursors producing at least a portion of said set of non-real-world enhancement signals (460).

13. The system of claim 1 wherein said backplane (435) includes a first set of distributed emitters (440) responsive to said infrared image (450) and a second set of windows (470) allowing said real-world signals (420) to pass through.

14. A method for producing an enhanced reality visualization (445) in a wearable device, comprising:
a) producing a set of real-world signals (420) from ambient of the wearable device;
b) producing a set of non-real world enhancement signals (460), said set of non-world enhancement signals (460) having one or more wavelengths below a visible spectrum of a human visual system;
c) merging a set of contributions (430) from said set of real-world signals (420) and said set of non-real-world enhancement signals (460) to produce the enhanced world visualization (445); and
d) up-converting said set of contributions (430) below said visible spectrum to one or more wavelengths in said visible spectrum.

## Patentansprüche

1. Tragbares Visualisierungssystem für eine erweiterte Realität, umfassend:
einen Echtwelt-Prozessor (485), der einen Satz von Echtwelt-Signalen (420) erzeugt;
einen Welterweiterungs-Generator (455, 440), der einen Satz von Nicht-Echtwelt-Erweiterungssignalen (460) erzeugt, wobei der Satz von Nicht-Echtwelt-Erweiterungssignalen (460) eine oder mehrere Wellenlängen unterhalb eines sichtbaren Spektrums eines menschlichen visuellen Systems aufweist; und
eine Backplane (435), die einen Satz von Beiträgen (430) aus dem Satz von Echtweltsignalen (420) und dem Satz von Nicht-Echtwelt-Erweiterungssignalen (460) vereinigt, um eine Visualisierung (445) einer erweiterten Welt zu erzeugen;
wobei die Backplane (435) den Satz von Beiträgen (430) unterhalb des sichtbaren Spektrums auf eine oder mehrere Wellenlängen in dem sichtbaren Spektrum aufwärtswandelt.

2. System nach Anspruch 1, wobei der Welterweiterungs-Generator (455, 440) einen Satz reflektierender Emitter (440) vom Anti-Stokes-Typ umfasst.

3. System nach Anspruch 1, wobei der Welterweiterungs-Generator (455, 440) einen Satz transmissiver Emitter (440) vom Anti-Stokes-Typ umfasst.

4. System nach Anspruch 1, wobei die eine oder mehreren Wellenlängen unterhalb des sichtbaren Spektrums des menschlichen visuellen Systems einen Satz von Infrarotstrahlungswellenlängen umfassen, wobei der Welterweiterungs-Generator (455, 440) eine Faraday-Aufwärtswandlungs-Anzeigearchitektur zum Verarbeiten des Satzes von Infrarotstrahlungswellenlängen zur Signaldefinition eines Infrarotstrahlungsbildes (450) umfasst, und wobei die Backplane (435) einen kooperativen Satz von aufwärtswandelnden Emittern (440) umfasst, die das Infrarotstrahlungsbild (450) in das sichtbare Spektrum aufwärtswandeln, um ein sichtbares virtuelles Bild zu erzeugen, das über die Backplane (435) mit den Echtwelt-Signalen (420) vereinigt ist.

5. System nach Anspruch 2, wobei die eine oder mehreren Wellenlängen unterhalb des sichtbaren Spektrums des menschlichen visuellen Systems einen Satz von Infrarotstrahlungswellenlängen umfassen, wobei der Welterweiterungs-Generator (455, 440) eine Faraday-Anzeigearchitektur vom Anti-Stokes-Typ zum Verarbeiten des Satzes von Infrarotstrahlungswellenlängen zur Signaldefinition eines Infrarotstrahlungsbildes (450) aufweist, und wobei die Backplane (435) den Satz von reflektierenden Emittern (440) vom Anti-Stokes-Typ umfasst, die das Infrarotstrahlungsbild (450) in das sichtbare Spektrum aufwärtswandeln, um ein sichtbares virtuelles Bild zu erzeugen, das über die Backplane (435) mit den Echtwelt-Signalen (420) vereinigt ist.

6. System nach Anspruch 3, wobei die eine oder mehreren Wellenlängen unterhalb der sichtbaren Spektrums des menschlichen visuellen Systems einen Satz von Infrarotstrahlungswellenlängen enthält, wobei der Welterweiterungs-Generator (455, 440) eine Faraday-Anzeigearchitektur vom Anti-Stokes-Typ umfasst zum Verarbeiten des Satzes von Infrarotstrahlungswellenlängen zur Signaldefinition eines Infrarotstrahlungsbildes (450), und wobei die Backplane (435) den Satz von transmissiven Emittern (440) vom Anti-Stokes-Typ umfasst, die das Infrarotstrahlungsbild (450) in das sichtbare Spektrum aufwärtswandeln, um ein sichtbares virtuelles Bild zu erzeugen, das über die Backplane (435) mit den Echtwelt-Signalen (420) vereinigt ist.

7. System nach Anspruch 1, wobei der Welterweiterungs-Generator (455, 440) einen Satz von bistabilen Anzeigebild-Primitivvorläufern enthält, die mindestens einen Teil des Satzes von Nicht-Echtwelt-Erweiterungssignalen (460) erzeugen.

8. System nach Anspruch 2, wobei der Welterweiterungs-Generator (455, 440) einen Satz von bistabilen Anzeigebild-Primitivvorläufern enthält, die mindestens einen Teil des Satzes von Nicht-Echtwelt-Erweiterungssignalen (460) erzeugen.

9. System nach Anspruch 3, wobei der Welterweiterungs-Generator (455, 440) einen Satz von bistabilen Anzeigebild-Primitivvorläufern enthält, die mindestens einen Teil des Satzes von Nicht-Echtwelt-Erweiterungssignalen (460) erzeugen.

10. System nach Anspruch 4, wobei der Welterweiterungs-Generator (455, 440) einen Satz von bistabilen Anzeigebild-Primitivvorläufern enthält, die mindestens einen Teil des Satzes von Nicht-Echtwelt-Erweiterungssignalen (460) erzeugen.

11. System nach Anspruch 5, wobei der Welterweiterungs-Generator (455, 440) einen Satz von bistabilen Anzeigebild-Primitivvorläufern enthält, die mindestens einen Teil des Satzes von Nicht-Echtwelt-Erweiterungssignalen (460) erzeugen.

12. System nach Anspruch 6, wobei der Welterweiterungs-Generator (455, 440) einen Satz von bistabilen Anzeigebild-Primitivvorläufern enthält, die mindestens einen Teil des Satzes von Nicht-Echtwelt-Erweiterungssignalen (460) erzeugen.

13. System nach Anspruch 1, wobei die Backplane (435) einen ersten Satz von verteilten Emittern (440) enthält, die auf das Infrarotbild (450) ansprechen, und einen zweiten Satz von Fenstern (470), die ein Hindurchpassieren der Echtwelt-Signale (420) ermöglichen.

14. Verfahren zum Erzeugen einer Visualisierung (445) einer erweiterten Realität in einem tragbaren Gerät, umfassend:
a) Erzeugen eines Satzes von Echtwelt-Signalen (420) aus der Umgebung der tragbaren Vorrichtung;
b) Erzeugen eines Satzes von Nicht-Echtwelt-Erweiterungssignalen (460), wobei der Satz von Nicht-Echtwelt-Erweiterungssignalen (460) eine oder mehrere Wellenlängen unterhalb eines sichtbaren Spektrums eines menschlichen visuellen Systems aufweist;
c) Zusammenführen eines Satzes von Beiträgen (430) aus dem Satz von Echtwelt-Signalen (420) und dem Satz von Nicht-Echtwelt-Erweiterungssignalen (460), um die Visualisierung (445) einer erweiterten Welt zu erzeugen; und
d) Aufwärtswandeln des Satzes von Beiträgen (430) unterhalb des sichtbaren Spektrums auf eine oder mehrere Wellenlängen in dem sichtbaren Spektrum.

## Revendications

1. Système portable de visualisation de réalité augmentée, comprenant :
un processeur du monde réel (485) produisant un ensemble de signaux du monde réel (420) ;
un générateur de monde amélioré (455, 440) produisant un ensemble de signaux d'amélioration du monde non réel (460), ledit ensemble de signaux d'amélioration du monde non réel (460) ayant une ou plusieurs longueurs d'onde au-dessous d'un spectre visible d'un système visuel humain ; et
un fond de panier (435) fusionnant un ensemble de contributions (430) dudit ensemble de signaux du monde réel (420) et dudit ensemble de signaux d'amélioration du monde non réel (460) afin de produire une visualisation de monde amélioré (445),
dans lequel ledit fond de panier (435) convertit de manière ascendante ledit ensemble de contributions (430) au-dessous dudit spectre visible en une ou plusieurs longueurs d'onde dans ledit spectre visible.

2. Système selon la revendication 1, dans lequel ledit générateur de monde amélioré (455, 440) inclut un ensemble d'émetteurs réfléchissants de type anti-Stokes (440).

3. Système selon la revendication 1, dans lequel ledit générateur de monde amélioré (455, 440) inclut un ensemble d'émetteurs transmissifs de type anti-Stokes (440).

4. Système selon la revendication 1, dans lequel lesdites une ou plusieurs longueurs d'onde au-dessous dudit spectre visible dudit système visuel humain incluent un ensemble de longueurs d'onde de rayonnement infrarouge, dans lequel ledit générateur de monde amélioré (455, 440) inclut une architecture d'affichage à conversion ascendante de Faraday afin de traiter ledit ensemble de longueurs d'onde de rayonnement infrarouge pour la définition de signal d'une image de rayonnement infrarouge (450), et dans lequel ledit fond de panier (435) inclut un ensemble coopératif d'émetteurs à conversion ascendante (440) convertissant de manière ascendante ladite image de rayonnement infrarouge (450) en ledit spectre visible pour la production d'une image virtuelle visible fusionnée avec lesdits signaux du monde réel (420) par ledit fond de panier (435).

5. Système selon la revendication 2, dans lequel lesdites une ou plusieurs longueurs d'onde au-dessous dudit spectre visible dudit système visuel humain incluent un ensemble de longueurs d'onde de rayonnement infrarouge, dans lequel ledit générateur de monde amélioré (455, 440) inclut une architecture d'affichage Anti-Stokes de Faraday afin de traiter ledit ensemble de longueurs d'onde de rayonnement infrarouge pour la définition de signal d'une image de rayonnement infrarouge (450), et dans lequel ledit fond de panier (435) inclut ledit ensemble d'émetteurs réfléchissants de type anti-Stokes (440) convertissant de manière ascendante ladite image de rayonnement infrarouge (450) en ledit spectre visible pour la production d'une image virtuelle visible fusionnée avec lesdits signaux du monde réel (420) par ledit fond de panier (435).

6. Système selon la revendication 3, dans lequel lesdites une ou plusieurs longueurs d'onde au-dessous dudit spectre visible dudit système visuel humain incluent un ensemble de longueurs d'onde de rayonnement infrarouge, dans lequel ledit générateur de monde amélioré (455, 440) inclut une architecture d'affichage Anti-Stokes de Faraday afin de traiter ledit ensemble de longueurs d'onde de rayonnement infrarouge pour la définition de signal d'une image de rayonnement infrarouge (450), et dans lequel ledit fond de panier (435) inclut ledit ensemble d'émetteurs transmissifs de type anti-Stokes (440) convertissant de manière ascendante ladite image de rayonnement infrarouge (450) en ledit spectre visible pour la production d'une image virtuelle visible fusionnée avec lesdits signaux du monde réel (420) par ledit fond de panier (435).

7. Système selon la revendication 1, dans lequel ledit générateur de monde amélioré (455, 440) inclut un ensemble de précurseurs de primitives d'image d'affichage bistable produisant au moins une portion dudit ensemble de signaux d'amélioration du monde non réel (460).

8. Système selon la revendication 2, dans lequel ledit générateur de monde amélioré (455, 440) inclut un ensemble de précurseurs de primitives d'image d'affichage bistable produisant au moins une portion dudit ensemble de signaux d'amélioration du monde non réel (460).

9. Système selon la revendication 3, dans lequel ledit générateur de monde amélioré (455, 440) inclut un ensemble de précurseurs de primitives d'image d'affichage bistable produisant au moins une portion dudit ensemble de signaux d'amélioration du monde non réel (460).

10. Système selon la revendication 4, dans lequel ledit générateur de monde amélioré (455, 440) inclut un ensemble de précurseurs de primitives d'image d'affichage bistable produisant au moins une portion dudit ensemble de signaux d'amélioration du monde non réel (460).

11. Système selon la revendication 5, dans lequel ledit générateur de monde amélioré (455, 440) inclut un ensemble de précurseurs de primitives d'image d'affichage bistable produisant au moins une portion dudit ensemble de signaux d'amélioration du monde non réel (460).

12. Système selon la revendication 6, dans lequel ledit générateur de monde amélioré (455, 440) inclut un ensemble de précurseurs de primitives d'image d'affichage bistable produisant au moins une portion dudit ensemble de signaux d'amélioration du monde non réel (460).

13. Système selon la revendication 1, dans lequel ledit fond de panier (435) inclut un premier ensemble d'émetteurs distribués (440) sensibles à ladite image infrarouge (450), et un deuxième ensemble de fenêtres (470) permettant auxdits signaux du monde réel (420) de passer à travers.

14. Procédé de production d'une visualisation de réalité augmentée (445) dans un dispositif portable, consistant à :
a) produire un ensemble de signaux du monde réel (420) à partir de l'environnement du dispositif portable ;
b) produire un ensemble de signaux d'amélioration du monde non réel (460), ledit ensemble de signaux d'amélioration du monde non réel (460) ayant une ou plusieurs longueurs d'onde au-dessous d'un spectre visible d'un système visuel humain ;
c) fusionner un ensemble de contributions (430) dudit ensemble de signaux du monde réel (420) et dudit ensemble de signaux d'amélioration du monde non réel (460) afin de produire la visualisation du monde amélioré (445) ; et
d) convertir de manière ascendante ledit ensemble de contributions (430) au-dessous dudit spectre visible en une ou plusieurs longueurs d'onde dans ledit spectre visible.
